# EUROPÄISCHE PATENTSCHRIFT

(11) **EP 3 616 998 B1**
(45) Veröffentlichungstag und Bekanntmachung des Hinweises auf die Patenterteilung: **24.02.2021**
(21) Anmeldenummer: 19191771.5
(22) Anmeldetag: 14.08.2019
(51) Int. Cl.: B60R 7/04, B60N 3/10

(54) **ABLAGEFACH FÜR EINEN INNENRAUM EINES FAHRZEUGS**
STORAGE COMPARTMENT FOR AN INTERIOR OF A VEHICLE
COMPARTIMENT DE RANGEMENT POUR UN HABITACLE D'UN VÉHICULE

(30) Priorität: 27.08.2018 DE 102018214456
(43) Veröffentlichungstag der Anmeldung: 04.03.2020
(73) Patentinhaber: Volkswagen AG, 38440 Wolfsburg (DE)
(72) Erfinder: Stock, Christian, 38448 Wolfsburg (DE); Neumann, Christopher, 38553 Wasbüttel (DE); Gis, Burkhard, 38471 Rühen (DE)

(56) Entgegenhaltungen:
- DE-A1-102011 100 833
- DE-A1-102016 012 540
- US-A1- 2004 129 747
- US-A1- 2005 051 584
- US-A1- 2007 182 183
- US-B2- 7 520 405

## Beschreibung

Die Erfindung betrifft ein Ablagefach für einen Innenraum eines Fahrzeugs, mit einer umlaufenden, sich zumindest im Wesentlichen vertikal erstreckenden und einen Stauraum begrenzenden Ablagefachwand, und mit einem reversibel in das Ablagefach einsetzbaren Einsatz mit einer Außenwand und einer Innenwand, wobei die Innenwand abschnittsweise teilkreisförmig ausgestaltet ist und wobei der Einsatz an der Innenwand Andruckelemente aufweist, um zumindest einen Getränkebehälter zu halten/fixieren, sowie eine Mittelkonsole für ein Fahrzeug mit einem solchen Ablagefach und einem weiteren Ablagefach.

Gängige Fahrzeuge, insbesondere Kraftfahrzeuge, bieten üblicherweise eine Vielzahl von verschiedenen Ablagemöglichkeiten. Ablagefächer an den Innenseiten der Türen, im Bereich der Instrumententafel, über dem Handschuhfach und in der Mittelkonsole sind dabei oftmals verfügbar, sodass den Fahrzeuginsassen verschiedene Möglichkeiten zur Verfügung stehen, mitgeführte Gegenstände während der Fahrt zu verstauen. Auch ist es bekannt, sogenannte Becherhalter oder Cupholder in den Fahrzeuginnenraum zu integrieren. Oftmals sind diese ausklappbar ausgestaltet und können nach der Verwendung wieder eingeklappt werden, sodass sie nicht mehr in den Fahrzeuginnenraum hineinragen.

In vielen Fällen ist in der Mittelkonsole ein relativ großes Ablagefach, das oftmals umgangssprachlich als Jumbobox bezeichnet wird, vorhanden. Um diese Jumbobox an die Bedürfnisse des Benutzers anzupassen sind Einsätze bekannt, die die Form des durch die Jumbobox gebildeten Ablagefachs an einen bestimmten Verwendungszweck anpassen oder die Jumbobox in mehrere kleinere Ablagefächer unterteilen.

Aus der DE 10 2007 027 533 A1 ist ein Einsatz für ein rechteckiges Ablagefach bekannt, der das Ablagefach derart modifiziert, dass ein oder zwei runde Getränkebehälter in dem Ablagefach verstaut werden können. Der Einsatz wird ungefähr in der Mitte des Ablagefachs eingesetzt und weist auf seinen beiden freien Seiten, die nicht im Kontakt mit der Innenwand des Ablagefachs stehen, eine gerundete Kontur sowie Andruckelemente auf, sodass die Getränkebehälter im Zusammenwirken mit der Innenwand des Ablagefachs gehalten werden können.

Die DE 10 2011 100 833 A1 beschreibt einen im wesentlichen X-förmigen Einsatz für einen Doppelgetränkehalter, mit dem dieser verkleinert und zum Halten von Getränkebehältern mit geringerem Durchmesser als ursprünglich vorgesehen angepasst werden kann. Der Einsatz weist gerundete Außenflächen auf, die an den jeweils zum Innenraum des Getränkehalters weisenden Seiten des Einsatzes angeordnet sind und jeweils ein Andruckelement aufweisen. Ein eingesetzter Getränkebehälter wird dann durch ein Zusammenwirken der Innenwand des Getränkehalters, der Außenwand des Einsatzes und der jeweiligen Andruckelemente gehalten.

Aus der DE 10 2016 012 540 A1 ist ein Einsatz für ein quadratisches Ablagefach bekannt, mit dessen Hilfe zwei Getränkebehälter in dem Ablagefach gehalten werden können. Der Einsatz weist zwei nebeneinanderliegende kreisrunde Öffnungen auf, die mit Andruckelementen versehen sind und jeweils einen Getränkebehälter aufnehmen können. Der Einsatz lässt sich in zwei verschiedenen Positionen in das Ablagefach einsetzen, wobei sich die Orientierung des Einsatzes in den beiden Positionen um 90° unterscheidet. Der Benutzer kann so entscheiden, ob er die beiden Getränkebehälter in Fahrtrichtung gesehen hintereinander oder nebeneinander anordnen möchte.

Weitere Getränkehalter für Fahrzeuge sind aus den Druckschriften DE 10 2005 056 613 A1, US 7 520 405 B2 und US 2011/0297715 A1 bekannt US7520405B2 offenbart eine Ablagefach für einen Innenraum eines Fahrzeugs gemäß dem Oberbegriff des Patantanspruchs 1.

Die Aufgabe der vorliegenden Erfindung besteht darin, ein Ablagefach mit flexiblen Anwendungsmöglichkeiten anzugeben, das auf einfache Art und Weise an verschiedene Einsatzzwecke angepasst werden kann, zumindest weitgehend crashsicher ist sowie das Verstauen von Getränkebehältern unterschiedlicher Größe ermöglicht.

Die Aufgabe wird gelöst durch ein gattungsgemäßes Ablagefach, bei dem eine Außenkontur der Außenwand im Wesentlichen identisch mit einem inneren Umfang der Ablagefachwand ist, und bei dem an einer Innenseite der Ablagefachwand erste Positionierungselemente sowie an einer Außenseite der Außenwand zu den ersten Positionierungselementen korrespondierende zweite Positionierungselemente angeordnet sind, die durch ein Zusammenwirken mit den ersten Positionierungselementen den Einsatz in einer vorbestimmten Position innerhalb des Ablagefachs fixieren.

Ein Ablagefach mit einem solchen Einsatz macht einen optisch hochwertigen Eindruck, da der Einsatz nur schwer überhaupt als solcher erkennbar ist und das gesamte Ablagefach formschön an den aktuellen Zweck, nämlich Getränkebehälter zu halten, angepasst ist.

Dadurch, dass die Außenkontur der Außenwand des Einsatzes im Wesentlichen identisch mit dem inneren Umfang der Ablagefachwand ist, wird ein sicherer Sitz des Einsatzes in dem Ablagefach sowie eine hohe Belastbarkeit erreicht. Die Kontur der Außenwand des Einsatzes ist entsprechend an die Form des Ablagefachs angepasst, wohingegen die Kontur der Innenwand des Einsatzes an den Einsatzzweck des Einsatzes angepasst ist. Der Einsatz füllt das gesamte Ablagefach aus, sodass keinesfalls der optische Eindruck einer notdürftig angepassten Sekundärlösung entsteht. Darunter, dass die Außenkontur der Außenwand im Wesentlichen identisch mit dem inneren Umfang der Ablagefachwand ist, wird insbesondere verstanden, dass die Innenseite der Ablagefachwand im eingesetzten Zustand an zumindest 80 % ihrer Länge, bevorzugt an zumindest 90 % ihrer Länge, parallel zu der Außenwand des Einsatzes verläuft und zwischen der Innenwand und der Außenwand lediglich eine Fuge, die einen geringen Abstand zwischen der Ablagefachwand und der Außenwand des Einsatzes definiert, verläuft.

Gemäß einer Weiterbildung der Erfindung ist der Einsatz nach unten hin im Wesentlichen offen ausgestaltet. Mit anderen Worten besitzt der Einsatz keinen Boden, sodass der Boden des Ablagefachs weiterhin genutzt wird. Auf diese Weise ergibt sich eine materialsparende Ausgestaltung, die somit Kosten- und gewichtssparend hergestellt werden kann. Alternativ ist es auch möglich, dass der Einsatz einen Teilboden aufweist, der sich über einen Teil der Grundfläche des Einsatzes erstreckt. Beispielsweise kann der Teilboden im Bereich zwischen der Innenwand und der Außenwand des Einsatzes angeordnet sein.

Eine konkrete Ausgestaltungsmöglichkeit sieht vor, dass die Innenwand des Einsatzes eine sanduhrförmige Kontur aufweist. In dem Einsatz ist dann eine erste Position und eine zweite Position für jeweils einen Getränkebehälter vorhanden. Der Innenraum des Einsatzes verjüngt sich dabei in seinem mittleren Bereich, ist aber nicht in zwei vollständig separate Bereiche aufgeteilt. Die Stirnseiten des Innenraums des Einsatzes können im Wesentlichen eben ausgestaltet sein. Die Form des Innenraums entspricht dann in etwa einem lang gestreckten Rechteck, dessen lange Seiten sich in der Mitte einander annähern, wobei abrupte Kanten vermieden werden. Der Umfang der Innenseite des Einsatzes beschreibt von oben gesehen in dem sich verjüngen den Bereich eine stetige Funktion mit sich sanft ändernden Krümmungsradien. Die Ecken des der Form des Innenraums zu Grunde liegenden Rechteck hingegen können auch nur relativ leicht abgerundet ausgestaltet sein. Alternativ können aber auch die gesamten Stirnseiten gerundet oder teilkreisförmig ausgestaltet sein, um den Einsatz an die kreisrunde Form gängiger Getränkebehälter anzupassen.

Gemäß einer vorteilhaften Ausgestaltung weist der Einsatz Griffmulden auf, die zum Entnehmen des Einsatzes durch einen Benutzer verwendet werden können. In den Griffmulden kann zumindest ein Bedienelement für einen Entriegelungsmechanismus zum Entnehmen des Einsatzes aus dem Ablagefach angeordnet sein. Die Griffmulden können dabei mittig zwischen der ersten Position und der zweiten Position für die Getränkebehälter angeordnet sein. Ein Benutzer kann dann beispielsweise mit Daumen und Zeigefinger oder Daumen und Mittelfinger einer Hand in die Griffmulden eingreifen, um den Einsatz zu entnehmen.

Insbesondere, wenn der Einsatz eine sanduhrförmige Innenkontur aufweist können die Griffmulden im verjüngten Bereich des Innenraums des Einsatzes angeordnet sein. Die Verjüngung übernimmt somit sowohl die Aufgabe, die Innenwandkontur an die aufzunehmenden Getränkebehälter anzupassen, als auch Platz für die Griffmulden bereitzustellen.

Gemäß einer vorteilhaften Ausgestaltung der Erfindung ist ein Taster zum Bedienen des Entriegelungsmechanismus an dem Einsatz vorhanden. Eine solche Taste oder ein solcher Knopf kann den Entriegelungsmechanismus, beispielsweise über eine Hebelmechanik oder eine Feder, entriegeln, sodass der Einsatz nach oben aus dem Ablagefach entnommen werden kann. Ein solcher Taster kann beispielsweise in den gegebenenfalls vorhandenen Griffmulden angeordnet sein, er kann aber auch an einem beliebigen anderen für den Benutzer zugänglichen Ort angeordnet sein.

Mit Vorteil ist das Ablagefach derart ausgestaltet, dass die ersten Positionierungselemente und die zweiten Positionierungselemente miteinander verrastet werden können. Es wird so eine sichere Verbindung zwischen dem Einsatz und dem Ablagefach erreicht sowie verhindert, dass sich der Einsatz unbeabsichtigt in dem Ablagefach löst oder ungewollt aus diesem entnommen wird, beispielsweise wenn nach einem von dem Einsatz gehaltenen Getränkebehälter gegriffen wird.

Gemäß einer zweckmäßigen Ausgestaltung der Erfindung ist der Einsatz derart ausgestaltet, dass der Einsatz auf einander gegenüberliegenden Seiten der Griffmulden Platz für jeweils einen Behälter bietet. Wenn das Ablagefach beispielsweise in der Mittelkonsole bzw. allgemein zwischen zwei Fahrzeugsitzen angeordnet ist steht so für jeden Fahrgast, der Zugriff auf das Ablagefach hat, ein eigener Platz zum Halten eines Getränkebehälters bereit. Eine vorteilhafte Ausgestaltung des erfindungsgemäßen Ablagefachs sieht vor, dass jeweils an Stirnwänden des Einsatzes sowie an Seitenwänden des Einsatzes Andruckelemente angeordnet sind, und dass die Andruckelemente derart ausgerichtet sind, dass jeweils drei Andruckelemente einen Behälter halten können und die von den Andruckelementen auf den Behälter ausgeübten Kräfte einen Winkel von jeweils zwischen 100° und 140°, bevorzugt zwischen 110° und 130°, besonders bevorzugt etwa 120°, zueinander aufweisen. Wenn der Einsatz Platz für zwei Getränkebehälter bietet und insgesamt an jeder Stirnwand des Einsatzes jeweils ein Andruckelement und an jeder Seitenwand des Einsatzes jeweils zwei Andruckelemente angeordnet sind, so stehen für jeden zu haltenden Getränkebehälter insgesamt drei Andruckelemente zur Verfügung. Wenn diese derart ausgerichtet sind, dass die von Ihnen ausgeübten Kräfte in Richtungen wirken, die in den angesprochenen Winkelverhältnissen zueinander stehen, so wird der zu haltende Getränkebehälter gleichmäßig aus verschiedenen Richtungen mit einer Kraft beaufschlagt, wodurch sich eine sichere und spielfreie Position des Getränkebehälters in dem Getränkehalter ergibt.

Eine Weiterbildung der Erfindung sieht eine Trennwand vor, die dritte Positionierungselemente, die komplementär zu den ersten Positionierungselementen ausgestaltet sind, aufweist, so dass die zumindest eine Trennwand alternativ zu dem Einsatz in das Ablagefach eingesetzt werden kann. Es wird so ein nochmals flexibler anpassbares Ablagefach erreicht. Wenn das Ablagefach insgesamt vier erste Positionierungselemente aufweist, so kann der Einsatz ebenfalls vier zweite Positionierungselemente aufweisen. Es kann dann an jeweils zwei ersten Positionierungselementen eine Trennwand befestigt werden, die selbst zwei dritte Positionierungselemente aufweist. Es sind somit im gerade beschriebenen Fall ausreichend erste Positionierungselemente vorhanden, um zwei einzelne Trennwände zu befestigen.

Die Aufgabe wird weiterhin gelöst durch eine Mittelkonsole für ein Fahrzeug, die ein erfindungsgemäßes Ablagefach sowie ein weiteres Ablagefach mit einer umlaufenden, sich zumindest im Wesentlichen vertikal erstreckenden und einen weiteren Stauraum begrenzenden weiteren Ablagefachwand aufweist, wobei das weitere Ablagefach an einer Innenseite der weiteren Ablagefachwand weitere Positionierungselemente zum Fixieren des Einsatzes, der Trennwände oder eines weiteren Einsatzes aufweist.

Eine solche Mittelkonsole bietet viel Stauraum und kann äußerst flexibel genutzt werden. So können bis zu vier große Getränkebehälter gleichzeitig verstaut werden, oder eines der Ablagefächer kann als Jumbobox und das andere als Getränkehalter verwendet werden. Dadurch, dass sowohl der Einsatz als auch die Trennwände in beiden Ablagefächern verwendet werden können ergibt sich eine kostengünstige Herstellung, da viele Gleichteile verwendet werden können.

Ein Ausführungsbeispiel einer erfindungsgemäßen Mittelkonsole kann ein erstes Ablagefach und eine zweites Ablagefach aufweisen. In das erste Ablagefach kann ein erster Einsatz eingesetzt werden, und in das zweite Ablagefach kann ein zweiter Einsatz eingesetzt werden. Die beiden Ablagefächer können sich in ihrer Größe unterscheiden und in Fahrtrichtung gesehen hintereinander in der Mittelkonsole angeordnet sein. Dabei können die Ablagefächer auf gleicher Höhe oder mit einem Höhenversatz zueinander angeordnet sein. Das erste Ablagefach kann dabei bereits einmal unterteilt sein und in dem zu dem zweiten Ablagefach hin weisenden Anteil ein relativ kleines Ablagefach aufweisen, das durch den Einsatz nicht modifiziert wird.

Wenn sowohl der erste Einsatz als auch der zweite Einsatz in den jeweiligen Ablagefächern eingesetzt sind, können insgesamt vier Möglichkeiten vorhanden sein, um einen Getränkebehälter aufzunehmen. Dabei kann der erste Einsatz eine erste Behälterposition und eine zweite Behälterposition aufweisen, und zusätzlich können in dem zweiten Einsatz eine dritte Behälterposition sowie die vierte Behälterposition verfügbar sein.

Ausführungsbeispiele der Erfindung werden anhand der Zeichnungen und der nachfolgenden Beschreibung näher erläutert. Es zeigen:
- Fig. 1:: ein erstes Ausführungsbeispiel eines erfindungsgemäßen Ablagefachs in einer Ansicht von schräg oben,
- Fig. 2:: das erste Ausführungsbeispiel mit eingesetztem Einsatz,
- Fig. 3:: das erste Ausführungsbeispiel mit eingesetzten Trennwänden,
- Fig. 4:: ein zweites Ausführungsbeispiel eines erfindungsgemäßen Ablagefachs in einer Ansicht von schräg oben,
- Fig. 5:: das zweite Ausführungsbeispiel mit eingesetzten Trennelementen,
- Fig. 6:: eine Blende,
- Fig. 7:: ein Grundmodul eines erfindungsgemäßen Einsatzes,
- Fig. 8:: ein Innenelement eines erfindungsgemäßen Einsatzes,
- Fig. 9:: ein Ablagefach, und
- Fig. 10:: ein Ausführungsbeispiel eines Trennelements im Detail.

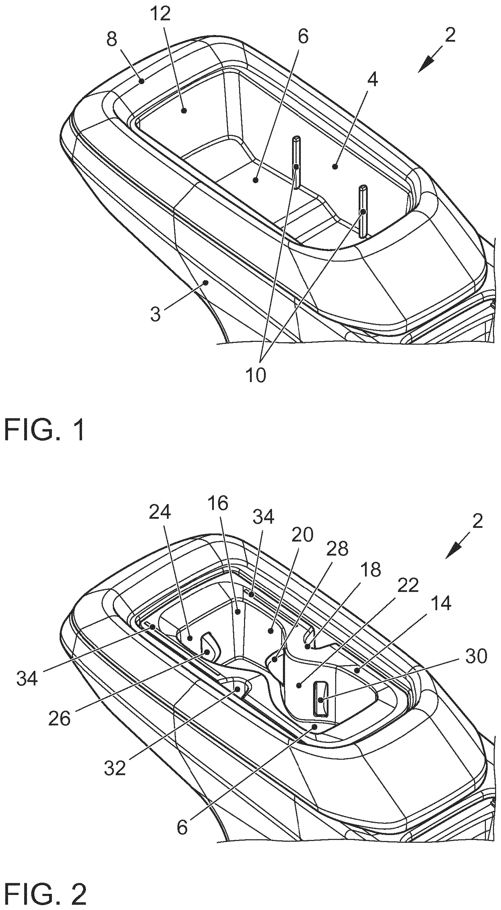

Figur 1 zeigt ein erstes Ausführungsbeispiel eines erfindungsgemäßen Ablagefachs 2 für ein Fahrzeug in einer Ansicht von schräg oben. Das Ablagefach 2 ist in eine Fahrzeug-Mittelkonsole 3 integriert. Es weist einen Boden 6 sowie eine sich vertikal erstreckende Ablagefachwand auf, von der in der dargestellten Perspektive die Seitenwand 4 und die hintere Stirnwand 12 sichtbar sind. Das Ablagefach 2 hat eine grob rechteckige Grundform und wird auf seiner Oberseite außerhalb der Öffnung des Ablagefachs 2 von einer Blende 8 abgeschlossen. Der Boden 6 ist im Wesentlichen eben, weist allerdings aufgrund der zugrunde liegenden Struktur der Mittelkonsole 3 eine treppenartige Struktur auf, in der horizontale Abschnitte durch geneigte Abschnitte verbunden werden. Weiterhin sind an der Seitenwand 4 zwei stegförmige, vertikal ausgerichtete Positionierungselemente 10 angeordnet. Insgesamt weist das Ablagefacht 2 vier erste Positionierungselemente 10 auf, von denen zwei in der Figur sichtbar sind und zwei von der gegenüberliegenden Seitenwand verdeckt werden. Die Positionierungselemente 10 sind voneinander beabstandet in etwa symmetrisch um eine gedachte, quer zur Fahrtrichtung verlaufende Mittellinie, die das Ablagefach 2 in zwei gleich große Hälften teilt, positioniert. Die Positionierungselemente 10 reichen bis zum Boden 6 des Ablagefachs 2 herab und nehmen etwa zwei Drittel der Höhe des Ablagefachs 2 ein.

Figur 2 zeigt das Ablagefach 2 aus Figur 1, in das nun ein Einsatz 14 eingesetzt worden ist. Der Einsatz 14 weist eine Innenwand 16 auf, die sich in die Stirnseiten 24 und die Seitenwände aufteilen lässt, wobei die Seitenwände wiederum konkave Anteile 20 und konvexe Anteile 22 aufweisen. Die Außenkontur des Einsatzes 14 stimmt nahezu vollständig mit der Innenkontur des Ablagefachs 2 über ein, sodass die Außenwand des Einsatzes 14 fast vollflächig an der Innenwand des Ablagefachs 2 anliegt. Da die Innenwand 16 des Einsatzes 14 grob vertikal verläuft und der Einsatz 14 selbst oberhalb der sanduhrförmigen oberen Öffnung des Einsatzes keinen Boden aufweist, liegt ein großer Teil des Bodens 6 des Ablagefachs 2 frei.

Die konkaven Anteile 20 und die konvexen Anteile 22 der Seitenwände bilden zusammen von oben gesehen eine gekrümmte Struktur aus, die bewirkt, dass der Innenraum des Einsatzes 14 sich zur Mitte hin verjüngt, womit grob bereits eine zum Aufnehmen von zylindrischen Getränkebehältern geeignete Form erzielt wird. In den Stirnseiten 24 ist jeweils ein Andruckelement 26 angeordnet. Dabei handelt es sich beispielsweise um gefederte Kunststoff- oder Gummielemente, die teilweise in dem Hohlraum zwischen der Innenwand 16 und der Außenwand des Einsatzes angeordnet sind und teilweise in den Innenraum des Einsatzes 14 hineinragen. Dadurch, dass diese entweder um eine Achse schwenkbar oder parallel zur horizontalen verschieblich ausgestaltet sind können sie unterschiedlich weit in den Innenraum des Einsatzes 14 hineinragen und somit den für einen Getränkebehälter verfügbaren Raum in seiner Größe und Form modifizieren. Dabei üben sie jeweils eine bezogen auf den Innenraum des Einsatzes 14 nach innen gerichtete Kraft aus. In den Seitenwänden und dabei insbesondere in den konvexen Anteilen 22 sind weitere Andruckelemente angeordnet, sodass in jeder Hälfte des Einsatzes 14 und somit für jede für einen Getränkebehälter verfügbare Position insgesamt jeweils drei Andruckelemente 26, 28, 30 vorhanden sind. Das zweite Andruckelement 28 und das dritte Andruckelement 30 sind dabei in einander gegenüberliegenden Abschnitten der Seitenwand 16 angeordnet. Die Andruckelemente 26, 28, 30 üben jeweils eine Kraft nach innen aus, deren Richtung optimaler Weise einen Winkel von 120° mit der Kraftrichtung eines der anderen Andruckelemente 26, 28, 30 bildet. Wenn ein zylindrischer Getränkebehälter eingesetzt wird übt daher im Idealfall jedes der Andruckelemente 26, 28, 30 eine Kraft, die direkt auf die Mittelachse des Getränkebehälters gerichtet ist, aus, sodass der Getränkebehälter sicher gehalten werden kann.

Die gesamte aus der Innenwand 16 gebildete Kontur ist grob sanduhrförmige und weist entsprechend in ihrem Zentrum auf jeder Seite eine Verjüngung auf. In dieser sind die Griffmulden 32 angeordnet. Aufgrund der Anordnung und der Dimensionierung kann ein Benutzer bequem in die Griffmulden 32 eingreifen und den Einsatz 14 aus dem Ablagefach 2 entnehmen. Dafür kann innerhalb der Griffmulden 32 ein in der Figur nicht dargestellte Mechanismus vorhanden sein, der eine zuvor erfolgte Verrastung oder Verriegelung zwischen dem Einsatz 14 und dem Ablagefach 2 aufhebt.

An der Oberseite des Einsatzes 14 können in Längsrichtung orientiert neben dem Innenraum des Einsatzes 14 noch zwei Kartenschlitze 34 angeordnet sein. In diese können beispielsweise Karten im Kreditkartenformat eingesteckt werden, sodass das Ablagefach 2 durch den Einsatz 14 zu einem multifunktionalen Fach umgestaltet wird, in das sowohl Getränkebehälter als auch EC-Karten, Kreditkarten oder Ähnliches eingesetzt werden können.

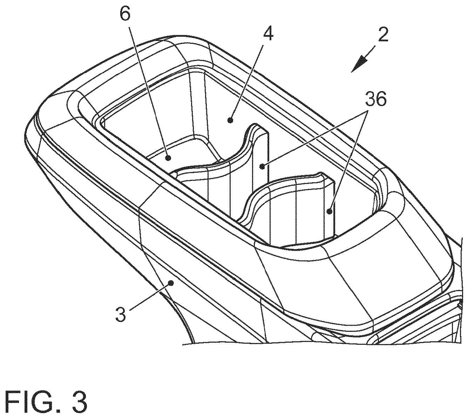

Figur 3 zeigt das Ablagefach 2 aus den ersten beiden Figuren, allerdings sind nun anstatt des Einsatzes zwei Trennelemente 36 in das Ablagefach 2 eingesetzt. Wie bereits in den beiden ersten Figuren sind die Seitenwand 4 und der Boden 6 des in der Mittelkonsole 3 angeordneten Ablagefachs 2 zu erkennen. Die beiden Trennelemente 36 unterteilen das Ablagefach 2 in insgesamt drei kleinere Fächer. Die Trennelemente 36 verbinden dabei jeweils die beiden Seitenwände 4 des Ablagefachs 2 miteinander. Im dargestellten Ausführungsbeispiel sind die Trennelemente 36 gekrümmt in Form eines doppelten S ausgestaltet. Beide Trennelemente sind identisch ausgestaltet und können jeweils um 180° um eine vertikale Achse gedreht in das Ablagefach 2 eingesetzt werden, wodurch sich unterschiedliche Formen der resultierenden Teilfächer ergeben.

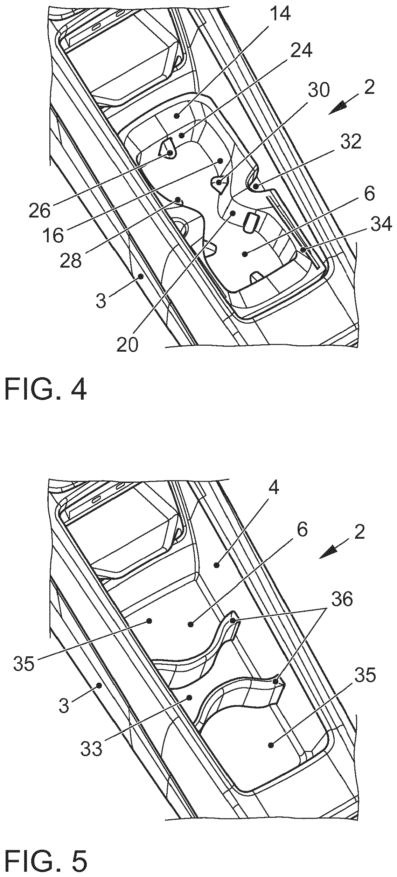

In Figur 4 ist ein zweites Ausführungsbeispiel eines erfindungsgemäßen Ablagefachs 2 aus einer Perspektive im Wesentlichen von oben dargestellt. Das Ablagefach 2 ist wiederum in einer Mittelkonsole 3 für ein Fahrzeug angeordnet. Auch hier sind der Boden 6, der Einsatz 14, die Innenwand 16, die konkaven Abschnitte der Innenwand 20, die Stirnseiten 24, die Andruckelemente 26, 28, und 30, die Griffmulden 32 sowie die Kartenschlitze 34 dargestellt. Jeweils drei Andruckelemente 26, 28, 30 definieren dabei gemeinsam einen Aufnahmeraum für einen Getränkebehälter. Dieser Aufnahmeraum kann einen Durchmesser von beispielsweise 6 cm bis 7,5 cm aufweisen.

Figur 5 zeigt eine Darstellung eines Ablagefachs 2 analog zu Figur 4 in das anstelle des Einsatzes die Trennelemente 36 eingesetzt sind. Durch die gekrümmte Form der Trennelemente 36 ist das durch die Trennelemente 36 gebildete mittlere Fach 33 deutlich kleiner als die beiden äußeren Fächer 35. Auch auf diese Art und Weise kann eine Anpassung des Innenraums des Ablagefachs 2 an darin zu verstauende Gegenstände erreicht werden. Insbesondere kann durch das Einsetzen der gekrümmten Trennelemente 36 kann eine Haltevorrichtung für große Getränkebehälter wie beispielsweise 1,5 I PET-Flaschen geschaffen werden. Der freie Durchmesser der Fächer 35 kann dabei zumindest 10 cm betragen.

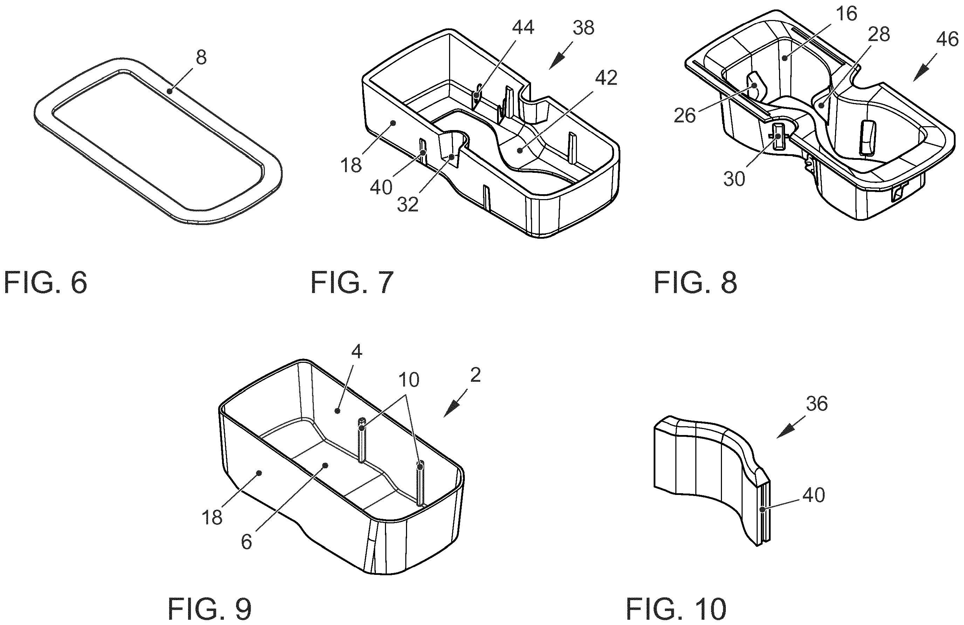

In den Figuren 6 bis 8 sind die Einzelteile, aus denen ein vollständiger Einsatz besteht, dargestellt. Figur 6 zeigt die den Einsatz nach oben abschließende Blende 8, die aus einem horizontal um die gesamte Oberseite des Einsatzes umlaufenden Kunststoffstreifen besteht.

In Figur 7 ist ein Grundmodul 38 dargestellt, dass im Wesentlichen aus der Außenwand 18 besteht. Die Außenwand 18 weist Nuten 40 auf, die zu den stegförmigen Positionierungselementen, die in dem Ablagefach angeordnet sind, korrespondierend ausgestaltet sind, sodass die Nuten 40 die Positionierungselemente umschließen, wenn der Einsatz von oben in das Ablagefach eingesetzt wird. Die Nuten 40 sind vorzugsweise weich ausgestaltet, um die Klapperfreiheit des Einsatzes gegenüber dem Ablagefach zu gewährleisten. Es ist weiterhin zu erkennen, dass die Griffmulden 32 nur einen Teil der Höhe des Einsatzes einnehmen. Weiterhin weist das Grundmodul 38 einen Grundmodulboden 42 auf, der bei in das Ablagefach eingesetztem Einsatz aber nur einen Teil dessen Bodens überdeckt. Die Kontur des Grundmodulbodens 42 ist an die Kontur der Innenwand des Einsatzes angepasst. Im Bereich der Außenwand 18 weist das Grundmodul 38 Halteelemente 44 auf, mittels derer die Karten innerhalb der bereits zuvor beschriebenen Kartenschlitze gehalten werden können.

Das Innenelement 46 ist in Figur 8 dargestellt. Über die bereits zuvor anhand der Darstellungen im zusammengebauten und eingesetzten Zustand beschriebenen Details hinausgehend ist insbesondere anhand des dritten Andruckelements 30 erkennbar, dass dieses Andruckelement 30 sich durch eine Öffnung der Innenwand 16 hindurch erstreckt und in dieser beweglich angeordnet ist. Im mittleren Bereich des Andruckelements 30 ist dabei die sich horizontal erstreckende Drehachse erkennbar. Die weiteren Andruckelemente 26, 28 sind analog ausgestaltet. Die Druckwirkung der Andruckelemente 26, 28, 30 kann jeweils durch einen umlaufenden Silikonring, einzelne Metallfedern oder eine federnde Ausführung der Andruckelemente 26, 28, 30 an sich erzeugt werden. Die Andruckelemente 26, 28, 30 können hierzu als Weichkomponenten ausgestaltet sein.

Figur 9 zeigt ein Ablagefach 2 außerhalb des Kontextes einer Mittelkonsole. Es sind wiederum die Außenwand 18, die Seitenwand 4 sowie der Boden 6 erkennbar. Ebenfalls noch einmal dargestellt sind die stegartigen Vorsprünge, die an den Seitenwänden 4 ausgebildet sind und so die Positionierungselemente 10 bilden. An diesen Positionierungselementen 10 kann wahlweise mittels der Nuten 40 des Grundmodul 38 der vollständige Einsatz befestigt werden, sodass sich das Ablagefach 2 als Getränkehalter bzw. Becherhalter nutzen lässt, oder es können ein oder mehrere der in Figur 10 dargestellten Trennelemente 36 an den Positionierungselementen 10 angeordnet und somit innerhalb des Ablagefachs 2 befestigt werden. Auch in diesem Fall wirken die Positionierungselemente 10 mit an den Trennelemente 36 angeordneten Nuten 40 zusammen.

### Bezugszeichenliste

- 2: Ablagefach
- 3: Mittelkonsole
- 4: Seitenwand
- 6: Boden
- 8: Blende
- 10: erste Positionierungselemente
- 12: Stirnwand
- 14: Einsatz
- 16: Innenwand
- 18: Außenwand
- 20: konkaver Anteil
- 22: konvexer Anteil
- 24: Stirnseite
- 26: Andruckelement, insbesondere erstes Andruckelement
- 28: Andruckelement, insbesondere zweites Andruckelement
- 30: Andruckelement, insbesondere drittes Andruckelement
- 32: Griffmulde
- 34: Kartenschlitz
- 36: Trennelement
- 38: Grundmodul
- 40: zweite Positionierungselemente, insbesondere Nut
- 42: Grundmodulboden
- 44: Halteelement
- 46: Innenelement
- 48: Seitenfläche
- 50: Oberseite

## Patentansprüche

1. Ablagefach (2) für einen Innenraum eines Fahrzeugs, mit einer umlaufenden, sich zumindest im Wesentlichen vertikal erstreckenden und einen Stauraum begrenzenden Ablagefachwand (4), und mit einem reversibel in das Ablagefach (2) einsetzbaren Einsatz (14) mit einer Außenwand (18) und einer Innenwand (16), wobei die Innenwand (16) abschnittsweise teilkreisförmig ausgestaltet ist und wobei der Einsatz (14) an der Innenwand (16) Andruckelemente (26, 28, 30) aufweist, um zumindest einen Getränkebehälter zu halten/fixieren, **dadurch gekennzeichnet, dass** eine Außenkontur der Außenwand (18) im Wesentlichen identisch mit einem inneren Umfang der Ablagefachwand ist (4), und dass an einer Innenseite der Ablagefachwand (4) erste Positionierungselemente (10) sowie an einer Außenseite der Außenwand (18) zu den ersten Positionierungselementen (10) korrespondierende zweite Positionierungselemente (40) angeordnet sind, die durch ein Zusammenwirken mit den ersten Positionierungselementen (10) den Einsatz (14) in einer vorbestimmten Position innerhalb des Ablagefachs (2) fixieren.

2. Ablagefach (2) nach dem vorstehenden Anspruch, **dadurch gekennzeichnet, dass** der Einsatz (14) nach unten hin im Wesentlichen offen ausgestaltet ist.

3. Ablagefach (2) nach einem der vorstehenden Ansprüche, **dadurch gekennzeichnet, dass** die Innenwand (16) eine sanduhrförmige Kontur aufweist.

4. Ablagefach (2) nach einem der vorstehenden Ansprüche, **dadurch gekennzeichnet, dass** der Einsatz (14) Griffmulden (32) aufweist, in denen zumindest ein Bedienelement für einen Entriegelungsmechanismus zum Entnehmen des Einsatzes (14) aus dem Ablagefach (2) angeordnet ist.

5. Ablagefach (2) nach Anspruch 4, **gekennzeichnet durch** einen Taster zum Bedienen des Entriegelungsmechanismus.

6. Ablagefach (2) nach einem der vorstehenden Ansprüche, **dadurch gekennzeichnet, dass** die ersten Positionierungselemente (10) und die zweiten Positionierungselemente (40) miteinander verrastet werden können.

7. Ablagefach (2) nach einem der vorstehenden Ansprüche, **dadurch gekennzeichnet, dass** der Einsatz (14) auf einander gegenüberliegenden Seiten der Griffmulden (32) Platz für jeweils einen Getränkebehälter bietet.

8. Ablagefach (2) nach einem der vorstehenden Ansprüche, **dadurch gekennzeichnet, dass** jeweils an Stirnwänden (12) des Einsatzes sowie an Seitenwänden (20, 22) des Einsatzes Andruckelemente (26, 28, 30) angeordnet sind, und dass die Andruckelemente (26, 28, 30) derart ausgerichtet sind, dass jeweils drei Andruckelemente (26, 28, 30) einen Behälter halten können und die von den Andruckelementen (26, 28,30) auf den Behälter ausgeübten Kräfte einen Winkel von jeweils zwischen 100° und 140°, bevorzugt zwischen 110° und 130°, besonders bevorzugt etwa 120°, zueinander aufweisen.

9. Ablagefach (2) nach einem der vorstehenden Ansprüche, **gekennzeichnet durch** zumindest eine Trennwand (36), die dritte Positionierungselemente (40), die komplementär zu den ersten Positionierungselementen (10) ausgestaltet sind, aufweist, so dass die zumindest eine Trennwand (36) alternativ zu dem Einsatz (14) in das Ablagefach (2) eingesetzt werden kann.

10. Mittelkonsole (3) für ein Fahrzeug, **gekennzeichnet durch** ein Ablagefach (2) nach einem der vorstehenden Ansprüche sowie durch ein weiteres Ablagefach (2) mit einer umlaufenden, sich zumindest im Wesentlichen vertikal erstreckenden und einen weiteren Stauraum begrenzenden weiteren Ablagefachwand, wobei das weitere Ablagefach (2) an einer Innenseite der weiteren Ablagefachwand weitere Positionierungselemente zum Fixieren des Einsatzes (14), der Trennwände (36) oder eines weiteren Einsatzes (14) aufweist.

## Claims

1. Storage compartment (2) for an interior of a vehicle, with a circumferential, at least substantially vertically extending storage compartment wall (4) delimiting a storage space, and with an insert (14) that can be reversibly inserted into the storage compartment (2), such insert having an external wall (18) and an internal wall (16), wherein the internal wall (16) is partially circular in sections and wherein the insert (14) has pressure elements (26, 28, 30) on the internal wall (16) in order to hold/fix at least one beverage container, **characterized in that** an external contour of the external wall (18) is substantially identical to an inner circumference of the storage compartment wall (4), and **that** first positioning elements (10) are arranged on an inside of the storage compartment wall (4) and second positioning elements (40) corresponding to the first positioning elements (10) are arranged on an outside of the external wall (18), which second positioning elements, by cooperating with the first positioning elements (10), fix the insert (14) in a predetermined position inside the storage compartment (2).

2. Storage compartment (2) according to the preceding claim, **characterized in that** the insert (14) is substantially open in a downward direction.

3. Storage compartment (2) according to any one of the preceding claims, **characterized in that** the internal wall (16) has an hourglass-shaped contour.

4. Storage compartment (2) according to any one of the preceding claims, **characterized in that** the insert (14) has grip recesses (32), in which at least one control element for an unlocking mechanism for removing the insert (14) from the storage compartment (2) is arranged.

5. Storage compartment (2) according to claim 4, **characterized by** a pushbutton for operating the unlocking mechanism.

6. Storage compartment (2) according to any one of the preceding claims, **characterized in that** the first positioning elements (10) and the second positioning elements (40) can be interlocked.

7. Storage compartment (2) according to any one of the preceding claims, **characterized in that** the insert (14) offers space for a beverage container respectively on opposite sides of the grip recesses (32).

8. Storage compartment (2) according to any one of the preceding claims, **characterized in that** pressure elements (26, 28, 30) are respectively arranged on end walls (12) of the insert and on side walls (20, 22) of the insert, and **that** the pressure elements (26, 28, 30) are oriented such that three pressure elements (26, 28, 30) respectively can hold a container and the forces exerted on the container by the pressure elements (26, 28, 30) are at an angle to one another of between 100° and 140°, preferably between 110° and 130°, particularly preferably about 120°, respectively.

9. Storage compartment (2) according to any one of the preceding claims, **characterized by** at least one partition wall (36) which has third positioning elements (40) configured to be complementary to the first positioning elements (10), so that the at least one partition wall (36) can be inserted into the storage compartment (2) as an alternative to the insert (14).

10. Center console (3) for a vehicle, **characterized by** a storage compartment (2) according to any one of the preceding claims and by a further storage compartment (2) having a circumferential further storage compartment wall extending at least substantially vertically and delimiting a further storage compartment, wherein the further storage compartment (2) has further positioning elements on an inside of the further storage compartment wall for fixing the insert (14), the partition walls (36) or a further insert (14).

## Revendications

1. Compartiment de rangement (2) pour un habitable d'un véhicule, présentant une paroi (4) de compartiment de rangement périphérique, s'étendant de manière au moins sensiblement verticale et délimitant un espace de rangement, et un insert (14) pouvant être placé de manière réversible dans le compartiment de rangement (2) présentant une paroi externe (18) et une paroi interne (16), la paroi interne (16) étant conçue de manière partiellement circulaire par sections et l'insert (14) présentant, au niveau de la paroi interne (16), des éléments de pressage (26, 28, 30), pour tenir/fixer au moins un récipient à boisson, **caractérisé en ce qu'un** contour externe de la paroi externe (18) est sensiblement identique à une périphérie interne de la paroi (4) de compartiment de rangement et **en ce que** des premiers éléments de positionnement (10) sont agencés au niveau d'une face interne de la paroi (4) de compartiment de rangement et des deuxièmes éléments de positionnement (40) correspondant aux premiers éléments de positionnement (10) sont agencés au niveau d'une face externe de la paroi externe (18), qui fixent, par une interaction avec les premiers éléments de positionnement (10), l'insert (14) dans une position prédéfinie à l'intérieur du compartiment de rangement (2).

2. Compartiment de rangement (2) selon la revendication précédente, **caractérisé en ce que** l'insert (14) est conçu de manière sensiblement ouverte vers le bas.

3. Compartiment de rangement (2) selon l'une quelconque des revendications précédentes, **caractérisé en ce que** la paroi interne (16) présente un contour en forme de sablier.

4. Compartiment de rangement (2) selon l'une quelconque des revendications précédentes, **caractérisé en ce que** l'insert (14) présente des creux de préhension (32) dans lesquels est agencé au moins un élément de commande pour un mécanisme de déverrouillage pour le prélèvement de l'insert (14) du compartiment de rangement (2).

5. Compartiment de rangement (2) selon la revendication 4, **caractérisé par** un bouton-poussoir pour commander le mécanisme de déverrouillage.

6. Compartiment de rangement (2) selon l'une quelconque des revendications précédentes, **caractérisé en ce que** les premiers éléments de positionnement (10) et les deuxièmes éléments de positionnement (40) peuvent être encliquetés l'un avec l'autre.

7. Compartiment de rangement (2) selon l'une quelconque des revendications précédentes, **caractérisé en ce que** l'insert (14) offre de la place pour à chaque fois un récipient à boisson sur des côtés opposés l'un à l'autre des creux de préhension (32).

8. Compartiment de rangement (2) selon l'une quelconque des revendications précédentes, **caractérisé en ce que** des éléments de pressage (26, 28, 30) sont à chaque fois agencés au niveau de parois frontales (12) de l'insert ainsi qu'au niveau de parois latérales (20, 22) de l'insert et **en ce que** les éléments de pressage (26, 28, 30) sont orientés de manière telle qu'à chaque fois trois éléments de pressage (26, 28, 30) peuvent tenir un récipient et les forces exercées par les éléments de pressage (26, 28, 30) sur le récipient présentent l'une par rapport à l'autre un angle à chaque fois entre 100° et 140°, de préférence entre 110° et 130°, de manière particulièrement préférée d'environ 120°.

9. Compartiment de rangement (2) selon l'une quelconque des revendications précédentes, **caractérisé par** au moins une paroi de séparation (36), qui présente des troisièmes éléments de positionnement (40), qui sont conçus de manière complémentaire aux premiers éléments de positionnement (10) de telle sorte que ladite au moins une paroi de séparation (36) peut être placée en variante de l'insert (14) dans le compartiment de rangement (2).

10. Console centrale (3) pour un véhicule, **caractérisée par** un compartiment de rangement (2) selon l'une quelconque des revendications précédentes ainsi que par un autre compartiment de rangement (2) présentant une autre paroi de compartiment de rangement périphérique, s'étendant au moins de manière essentiellement verticale et délimitant un autre espace de rangement, l'autre compartiment de rangement (2) présentant, au niveau d'une face interne de l'autre paroi de compartiment de rangement, d'autres éléments de positionnement pour la fixation de l'insert (14), des parois de séparation (36) ou d'un autre insert (14).
